# EUROPÄISCHE PATENTSCHRIFT

(11) **EP 2 213 360 B1**
(45) Veröffentlichungstag und Bekanntmachung des Hinweises auf die Patenterteilung: **24.10.2012**
(21) Anmeldenummer: 09177324.2
(22) Anmeldetag: 27.11.2009
(51) Int. Cl.: B01D 46/30, B01D 46/00

(54) **Luftfiltereinrichtung**
Air filter device
Dispositif de filtre à air

(30) Priorität: 16.01.2009 DE 102009004909
(43) Veröffentlichungstag der Anmeldung: 04.08.2010
(73) Patentinhaber: Mahle International GmbH, 70376 Stuttgart (DE)
(72) Erfinder: Koser, Gerhard, 73066, Uhingen (DE)
(74) Vertreter: BRP Renaud & Partner

(56) Entgegenhaltungen:
- WO-A1-2007/095675
- DE-C- 272 384
- DE-U1- 7 924 103
- US-A- 2 273 779

## Beschreibung

Die vorliegende Erfindung betrifft eine Luftfiltereinrichtung mit einem einen Filtergehäusetopf und einen Filtergehäusedeckel aufweisenden Filtergehäuse, in welchem zumindest ein Filterelement angeordnet ist, gemäß dem Oberbegriff des Anspruchs 1.

Eine gattungsgemäße Luftfiltereinrichtung ist beispielsweise aus der WO 2005/082490 A1 bekannt.

Aus der US 2,273,779 A ist eine Luftfiltereinrichtung mit einem einen Filtergehäusetopf und einen Filtergehäusedeckel aufweisenden Filtergehäuse bekannt, in welchem zumindest ein Filterelement, hier Aktivkohle, angeordnet ist. An einem Boden des Filtergehäuses ist dabei ein exzentrischer Lufteinlass vorgesehen, ebenso wie ein zentraler Lufteinlass. Oberhalb des Bodens ist dabei ein luftdurchlässiger Zwischenboden vorgesehen, der zentral an einem domartig ausgebildeten Gehäuse des Lufteinlasses und radial außen an einer Wand des Filtergehäusetopfs abgestützt ist. Im Bereich der Anbindung des Zwischenbodens an den Lufteinlass bzw. das domartige Gehäuse des Lufteinlasses ist ein Strömungsleitelement vorgesehen, das so ausgebildet ist, dass der luftdurchlässige Zwischenboden vorzugsweise gleichmäßig von unten mit einströmender Luft beaufschlagt wird.

Bekannte Luftfiltereinrichtungen werden heutzutage auch vermehrt im modernen Kraftfahrzeugbau eingesetzt, um einerseits eine Frischluftzufuhr zu einem Fahrgastinnenraum qualitativ zu verbessern und andererseits Kraftstoffdämpfe, beispielsweise in einem Tankentlüftungsbereich, an einem unkontrollierten Austritt in die Umgebung zu hindern. Aus diesem Grund weisen derartige Luftfiltereinrichtungen üblicherweise ein Filterelement auf, welches Aktivkohle, also einen Kohlenwasserstoffabsorber, enthält. Die Aktivkohle ist dabei entweder als Schüttgut oder in anderer Weise gepackt in dem Filtergehäuse der Luftfiltereinrichtung angeordnet und sollte zur Erzielung eines möglichst hohen Filtrationsgrades möglichst gleichmäßig durchströmt werden. Dies ist jedoch aufgrund von sogenannten Totgebieten, welche die nur mangelhaft oder gar nicht durchströmt sind, nicht immer möglich.

Die vorliegende Erfindung beschäftigt sich mit dem Problem, für eine gattungsgemäße Luftfiltereinrichtung eine verbesserte oder zumindest eine alternative Ausführungsform anzugeben, die sich insbesondere durch eine verbesserte Filtration auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, im Bereich eines Lufteinlasses in eine Luftfiltereinrichtung ein Strömungsleitelement sowie einen Zwischenboden anzuordnen, wobei beide Elemente zusammen eine vorzugsweise homogene Durchströmung eines in der Luftfiltereinrichtung angeordneten Filterelementes erzwingen und dadurch so genannte "Totgebiete" vermeiden und einen sehr hohen Filtrationsgrad erzielen. Hierzu weist die erfindungsgemäße Luftfiltereinrichtung einen Filtergehäusetopf und einen Filtergehäusedeckel auf, wobei an einem Boden des Filtergehäusetopfes zentral der Lufteinlass angeordnet ist. Oberhalb des Bodens ist ein luftdurchlässiger Zwischenboden vorgesehen, der zentral an dem domartig in den Filtergehäusetopf hineinragenden Lufteinlass und radial außen an einer Wand des Filtergehäusetopfes abgestützt ist. Das Strömungsleitelement ist dabei im Bereich der Anbindung des Zwischenbodens an den Lufteinlass vorgesehen und derart ausgebildet, dass der luftdurchlässige Zwischenboden gleichmäßig von unten mit einströmender Luft beaufschlagt wird, wodurch eine gleichmäßige Durchströmung des darüber angeordneten Filterelementes erzwungen werden kann. Der Zwischenboden ist dabei kegelförmig ausgebildet ist, wobei die Spitze des Zwischenbodens zum Lufteinlass gerichtet ist. Das Strömungsleitelement verteilt dabei den in Axialrichtung der Luftleitrichtung durch den Lufteinlass einströmenden und mit Kohlenwasserstoffen behafteten Luftstrom in Radialrichtung in den zwischen dem Boden des Filtergehäusetopfes und dem Zwischenboden angeordneten Ringraum und ermöglicht dadurch einen in diesem Ringraum homogenen Druck, der sich in einer gleichmäßigen Durchströmung des darüber angeordneten Filterelementes abbauen kann. Da mit der erfindungsgemäßen Luftfiltereinrichtung sogenannte Totgebiete weitestgehend vermieden werden können, weist die erfindungsgemäße Luftfiltereinrichtung einen besonders hohen Wirkungsgrad und eine besonders hohe Filterleistung auf.

Bei einer vorteilhaften Weiterbildung der erfindungsgemäßen Lösung, weist das Strömungsleitelement die Gestalt einer in Richtung des Lufteinlasses weisenden Pyramide, eines Kegels, einer konischen Spitze oder eines Diamanten mit mehreren Facetten auf. Die Orientierung der Pyramide bzw. des Kegels oder des Diamanten ist dabei nach unten, das heißt hin zum Lufteinlass gewählt, wodurch die aus dieser Richtung in die erfindungsgemäße Luftfiltereinrichtung einströmende Luft von dem Strömungsleitelement gleichmäßig in den zwischen dem Boden des Filtergehäusetopfes und dem Zwischenboden gelegenen Ringraum verteilt wird. Sowohl der Zwischenboden als auch das Strömungsleitelement können dabei aus Kunststoff ausgebildet sein, wodurch sich selbst schwierige, das heißt komplexe, Formen einfach realisieren lassen. Denkbar ist auch, dass das Strömungsleitelement mit dem domartig in den Filtergehäusetopf hineinragenden Einlass verbunden, insbesondere einteilig mit diesem ausgebildet ist, während der Zwischenboden als gesondertes Einlegeteil hergestellt und später eingebaut wird.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

Dabei zeigen, jeweils schematisch
- Fig. 1: eine Schnittdarstellung durch eine erfindungsgemäße Luftfiltereinrichtung,
- Fig. 2: eine Ansicht von oben auf eine geöffnete Luftfiltereinrichtung.

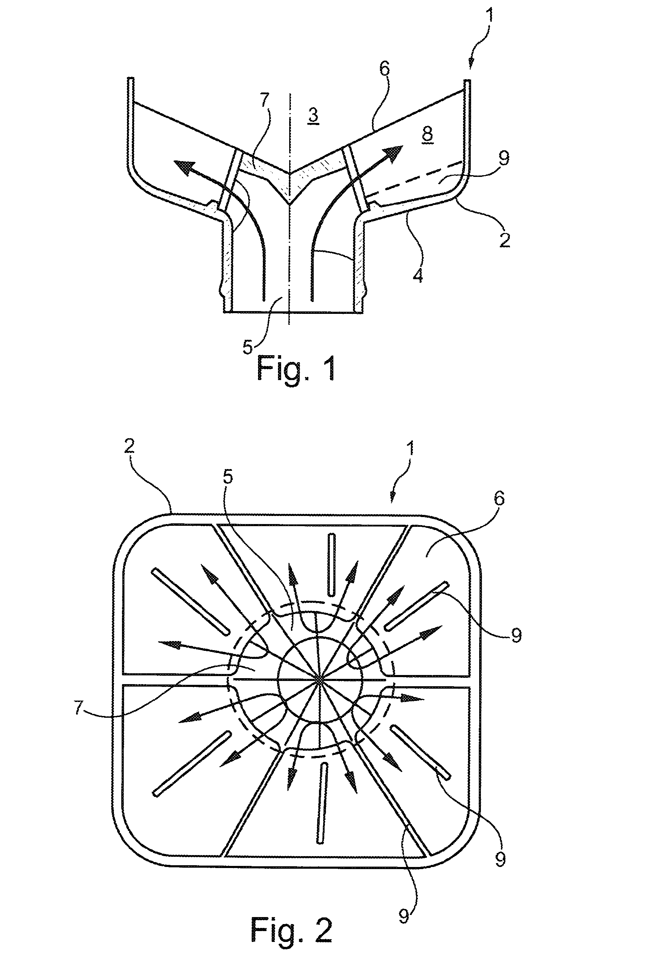

Entsprechend der Fig. 1, weist eine erfindungsgemäße Luftfiltereinrichtung 1 einen Filtergehäusetopf 2 auf, welcher von einem nicht gezeigten Filtergehäusedeckel nach oben verschlossen ist. Innerhalb des Filtergehäusetopfes ist ein Filterelement 3 angeordnet, welches üblicherweise Aktivkohle enthält und zur Absorption von Kohlenwasserstoffen dient. Demgemäß ist die erfindungsgemäße Luftfiltereinrichtung 1 beispielsweise im Bereich einer Tankentlüftung oder einer Lüftungseinrichtung für einen Fahrgastinnenraum in einem Kraftfahrzeug angeordnet. Zentral an einem Boden 4 des Filtergehäusetopfes 2 ist dabei ein Lufteinlass 5 angeordnet, oberhalb dessen ein luftdurchlässiger Zwischenboden 6 vorgesehen ist, welcher beispielsweise konisch oder horizontal ausgebildet sein kann. Der Zwischenboden ist dabei zentral an dem domartig in den Filtergehäusetopf 2 hineinragenden Lufteinlass 5 und radial außen an einer Wand des Filtergehäusetopfes 2 abgestützt. Im Bereich der Anbindung des Zwischenbodens 6 an den Lufteinlass 5 ist ein Strömungsleitelement 7 vorgesehen, das so ausgebildet ist, dass der luftdurchlässige Zwischenboden 6 gleichmäßig von unten mit einströmender Luft beaufschlagt wird, so dass eine gleichmäßige Durchströmung des darüber liegenden Filterelementes 3 erzwungen wird. Eine gleichmäßige Durchströmung des Filterelementes 3 ist insbesondere für einen hohen Filtrationsgrad der Luftfiltereinrichtung 1 erforderlich.

Wie der Fig. 1 weiter zu entnehmen ist, ist der Zwischenboden 6 kegelartig ausgebildet, während das Strömungsleitelement 7 die Gestalt eines in Richtung des Lufteinlass 5 weisenden Diamanten besitzt. Die einzelnen Facetten des diamantähnlichen Strömungsleitelementes 7 sorgen dabei für die gleichmäßige Verteilung des durch den Lufteinlass 5 einströmenden Luftstroms in einen zwischen dem Zwischenboden 6 und dem Boden 4 liegenden Ringraum 8. Das Strömungsleitelement 7 ermöglicht so eine nahezu homogene Druckverteilung in dem Ringraum 8, so dass das darüber angeordnete Filterelement 3 gleichmäßig über die gesamte Fläche von unten mit Kohlenwasserstoff befrachteter Luft beaufschlagt wird. Die vorgenannte Aufzählung zeigt bereits, dass das Strömungsleitelement 7 unterschiedlichste Gestalten aufweisen kann, wobei die einzelnen Arten der Strömungsleitelemente 7 jeweils so ausgebildet sind, dass eine gleichmäßige Lufteinleitung in den Ringraum 8 gewährleistet werden kann.

In dem durch den Zwischenboden 6 einerseits und den Boden 4 andererseits begrenzten Ringraum 8 können zusätzlich Luftleitelemente 9 angeordnet sein (vgl. Fig. 2), die üblicherweise in Radialrichtung verlaufen können, jedoch nicht müssen. Die Luftleitelemente 9 sind dabei vorzugsweise am Boden 4 des Filtergehäusetopfes 2 befestigt bzw. einstückig mit diesem ausgeführt. Von besonderem Vorteil bei der erfindungsgemäßen Luftfiltereinrichtung 1 ist, dass bisher erforderliche Siebkörbe als Sonde nicht mehr erforderlich sind und daher entfallen können. Ebenfalls von großem Vorteil ist, dass mit der erfindungsgemäßen Luftfiltereinrichtung 1 bisher stets vorhandene Toträume vermieden und dadurch die Filterleistung insgesamt erhöht werden kann.

## Patentansprüche

1. Luftfiltereinrichtung (1) mit einem einen Filtergehäusetopf (2) und einen Filtergehäusedeckel aufweisenden Filtergehäuse, in welchem zumindest ein Aktivkohle enthaltendes Filterelement (3) angeordnet ist, wobei
- an einem Boden (4) des Filtergehäusetopfes (2) ein zentraler Lufteinlass (5) vorgesehen ist,
- oberhalb des Bodens (4) ein luftdurchlässiger Zwischenboden (6) vorgesehen ist, der zentral an dem domartig in den Filtergehäusetopf (2) hineinragenden Lufteinlass (5) und radial außen an einer Wand des Filtergehäusetopfes (2) abgestützt ist,
**dadurch gekennzeichnet,**
- **dass** im Bereich der Anbindung des Zwischenbodens (6) an den Lufteinlass (5) ein Strömungsleitelement (7) vorgesehen ist, welches so ausgebildet ist, dass der luftdurchlässige Zwischenboden (6) gleichmäßig von unten mit einströmender Luft beaufschlagt wird, so dass eine gleichmäßige Durchströmung des darüber angeordneten Filterelementes (3) gegeben ist,
- **dass** der Zwischenboden (6) kegelförmig ausgebildet ist, wobei die Spitze des Zwischenbodens (6) zum Lufteinlass (5) gerichtet ist.

2. Luftfiltereinrichtung nach Anspruch 1,
**dadurch gekennzeichnet,**
**dass** das Strömungsleitelement (7) die Gestalt einer in Richtung des Lufteinlass (5) weisenden Pyramide, eines Kegels oder eines Diamanten aufweist.

3. Luftfiltereinrichtung nach Anspruch 1 oder 2,
**dadurch gekennzeichnet,**
**dass** in dem durch den Zwischenboden (6) und den Boden (4) begrenzten Ringraum (8) Luftleitelemente (9) angeordnet sind.

4. Luftfiltereinrichtung nach Anspruch 3,
**dadurch gekennzeichnet,**
**dass** die Luftleitelemente (9) in Radialrichtung verlaufen.

5. Luftfiftereinrichtung nach Anspruch 3 oder 4,
**dadurch gekennzeichnet,**
**dass** die Luftleitelemente (9) am Boden (4) des Filtergehäusetopfes (2) befestigt, insbesondere einstückig mit diesem ausgebildet sind.

## Claims

1. An air filter device (1), comprising a filter housing pot (2) and a filter housing which has a filter housing cover and in which at least one filter element (3) is arranged which contains activated carbon,
wherein
- a central air inlet (5) is provided on a bottom (4) of the filter housing pot (2),
- above the bottom (4), an air-permeable intermediate bottom (6) is provided which is centrally supported on the air inlet (5) which protrudes in a dome-like manner into the filter housing pot (2) and is supported radially on the outside on a wall of the filter housing pot (2), **characterized in**
- **that** a flow guiding element (7) is provided in the region of the connection of the intermediate bottom (6) to the air inlet (5), which flow guiding element is configured in such a manner that the air-permeable intermediate bottom (6) is uniformly impinged upon from below with inflowing air so that a uniform flow is ensured through the filter element (3) arranged thereabove,
- **that** the intermediate bottom (6) is configured in a conical manner, the tip of the intermediate bottom (6) pointing toward the air inlet (5).

2. The air filter device according to claim 1,
**characterized in**
**that** the flow guiding element (7) has the shape of a pyramid, a cone or a diamond pointing toward the air inlet (5).

3. The air filter device according to claim 1 or claim 2,
**characterized in**
**that** air guiding elements (9) are arranged in the annular space (8) bordered by the intermediate floor (6) and the bottom (4).

4. The air filter device according to claim 3,
**characterized in**
**that** the air guiding elements (9) extend in the radial direction.

5. The air filter device according to claim 3 or claim 4,
**characterized in**
**that** the air guiding elements (9) are fastened on the bottom (4) of the filter housing pot (2), and are in particular formed integrally therewith.

## Revendications

1. Dispositif de filtre à air (1) comportant un logement de filtre présentant un pot de logement de filtre (2) et un couvercle de logement de filtre, dans lequel au moins un élément de filtre (3) contenant un charbon actif est disposé, dans lequel+
- sur une base (4) du pot de logement de filtre (2) une admission d'air (5) centrale est prévue,
- au-dessus de la base (4) une base intermédiaire (6) perméable à l'air est prévue, laquelle est appuyée centralement sur l'admission d'air (5) dépassant en forme de dôme à l'intérieur du pot de logement de filtre (2) et radialement à l'extérieur sur une paroi du pot de logement de filtre (2),
**caractérisé en ce que**
- au niveau de la liaison de la base intermédiaire (6) à l'admission d'air (5), un élément de guidage d'écoulement (7) est prévu, lequel est réalisé de telle sorte que la base intermédiaire perméable à l'air (6) soit sollicitée uniformément par-dessous par une entrée d'air s'écoulant, de telle sorte qu'un débit uniforme de l'élément de filtre (3) disposé au-dessus soit induit,
- la base intermédiaire (6) est réalisée en forme de cône, dans lequel la pointe de la base intermédiaire (6) est dirigée vers l'admission d' air (5).

2. Dispositif de filtre à air selon la revendication 1, **caractérisé en ce que**
l'élément de guidage d'écoulement (7) présente la forme d'une pyramide, d'un cône ou d'un diamant orienté dans la direction de l'admission d'air.

3. Dispositif de filtre à air selon les revendications 1 ou 2,
**caractérisé en ce que**
des éléments de guidage d'air (9) sont disposés dans l'espace annulaire (8) délimité par la base intermédiaire (6) et la base (4).

4. Dispositif de filtre à air selon la revendication 3, **caractérisé en ce que**
les éléments de guidage d'air (9) s'étendent dans la direction radiale.

5. Dispositif de filtre à air selon les revendications 3 ou 4,
**caractérisé en ce que**
les éléments de guidage d'air (9) sont fixés sur la base (4) du pot de logement de filtre (2), notamment sont réalisés en un seul tenant avec celle-ci.
